# EUROPÄISCHE PATENTSCHRIFT

(11) **EP 0 523 209 B1**
(45) Veröffentlichungstag und Bekanntmachung des Hinweises auf die Patenterteilung: **31.08.1994**
(21) Anmeldenummer: 92903194.6
(22) Anmeldetag: 14.01.1992
(51) Int. Cl.: B65G 67/60

(54) **SCHIFFSBE- ODER -ENTLADER**
LOADING OR DISCHARGING DEVICE FOR A SHIP
CHARGEUR OU DECHARGEUR DE NAVIRES

(30) Priorität: 14.01.1991 DE 4100852
(43) Veröffentlichungstag der Anmeldung: 20.01.1993
(73) Patentinhaber: PWH Anlagen + Systeme GmbH, D-66386 St. Ingbert-Rohrbach (DE)
(72) Erfinder: FRIEDRICH, Hans-Jürgen, D-6600 Saarbrücken (DE)
(74) Vertreter: John, Ernst
(86) Internationale Anmeldenummer: EP9200060
(87) Internationale Veröffentlichungsnummer: WO9212084

(56) Entgegenhaltungen:
- EP-A- 0 236 845
- EP-A- 0 401 406
- DE-C- 161 876
- Patent Abstracts of Japan, Bd. 8, Nr. 170 (M-315) (1607), 7. August 1984, & JP-A-59 064 406

## Beschreibung

Die Erfindung betrifft einen Schiffsbe- oder -entlader gemäß gattungsbildendem Teil des ersten Patentanspruches.

Durch die DE-A 30 29 863 ist ein fahrbarer Schiffsentlader zur kontinuierlichen Entnahme von Schüttgut mittels eines an einem vertikalen Träger als Becherwerk ausgebildeten Endlos-Steilförderers bekannt. Der vertikale Träger ist an seinem unteren Ende mit einem im wesentlichen waagerechten Aufnahmearm starr verbunden und L-förmig ausgebildet. Um den vertikalen Träger sowie den Aufnahmearm ist eine Becherkette so geführt, daß eine durchgehende übergabefreie Förderung des Schüttgutes vom Bereich des waagerechten Aufnahmearmes über den Bereich des vertikalen Trägers zu einem in der Verlängerung dieses radial ausgebildeten oberen Abwurfendes und von diesem zu einem das obere Ende umschließenden, konzentrisch gelagerten, horizontal angeordneten Drehteller bzw. Ringförderer vorgesehen ist.

Der aus einem Vertikal- sowie aus einem Horizontalbereich gebildete Steilförderer ist im Bereich seines oberen Endes am freien Ende eines Auslegers verlagert. In Abhängigkeit von der zu entspeichernden Schüttgutmenge fällt dieser Steilförderer vom Gewicht her sehr hoch aus, wodurch auf der anderen Seite des Auslegers verhältnismäßig hohe Gegengewichte vorgesehen werden müssen. Diese Geräte lassen sich bei Schiffen mit wenig Wellenbewegung im Hafen verhältnismäßig problemlos einsetzen und sind auch für hohe Schüttgutausträge geeignet. Sind jedoch Wasserverhältnisse vorgegeben, die zu einem Heben und Senken des Schiffskörpers in vorgegebenen Intervallen oder aber stoßweise führen, bestehen Schwierigkeiten, den Steilförderer diesen Bewegungen anzupassen. Es bietet sich zwar an, das Gegengewicht weiter zu erhöhen, wobei jedoch auch eine Verteuerung der Steuerung miteinkalkuliert werden muß, die nicht unbedingt in der Lage ist, den verhältnismäßig schweren Steilförderer den schnellen Schwankungen der Schiffsbewegungen anzupassen. Demzufolge besteht hier nach wie vor die Gefahr, daß es zu Kollisionen zwischen dem Steilförderer und dem Schiff kommen kann, die u.U. zu Beschädigungen an dem einen oder dem anderen oder aber an beiden führen können.

Der nächste Stand der Technik EP-A-236 845 ist ein Steilförderer, insbesondere für die Schiffsentladung, zu entnehmen, der einen oberen fest-stehenden oder um eine senkrechte Achse schwenkbaren Teil aufweist, an dessen unterem Ende ein ausschwenkbarer, an äußeren Enden mit einer Umlenkrolle versehener Teil angelenkt ist und beide Trume des Steilförderers im Bereich der Anlenkung ausschwenkseitig durch Führungen gestützt und so geführt sind, daß der in ausgeschwenkter Stellung untere Trum des ausschwenkbaren Teils ansteigend fördert. Der ausschwenk-bare Teil weist an seinem unteren Ende einen angelenkten, in Ausschwenkrichtung vorspringenden Fußteil auf, der so mit dem unteren Teil verbunden ist, daß er in jeder Ausschwenk-stellung horizontal gehalten bzw. einstellbar ist. Der aus-schwenkbare Teil wird aus zwei zusammen ein Gelenk-Parallelogramm bildenden Lenkern gebildet, wobei an einem der Lenker eine als Hydraulikzylinder ausgebildete Verstellein richtung angreift. Außerdem ist im horizontalen Bereich ein den Längenausgleich der Ketten des Becherwerkes herbeiführen der weiterer Hydraulikzylinder vorgesehen, der unabhängig vom Hydraulikzylinder arbeitet, der das Ausschwenken bewirkt. Dabei ist festzustellen, daß der bauliche Aufwand des Trums vom vertikalen und horizontalen Bereich in Verbindung mit der anschließenden gelenkigen Verbindung und einseitigen Be-tätigung durch den Hydraulikzylinder als aufwendig angesehen wird.

Eine weitere Bauart eines Schiffsbe- und -entladers ist aus EP-A-401 406 bekannt, die mit der gattungsbildenden nicht zu vergleichen ist, da der dort vorgesehene Hydraulikzylinder nur eine Hebefunktion hat, während eine Längenkorrektur der Kette nicht erforderlich ist.

Schließlich ist durch die JP-A 59-64406 ein Becherwerk bekannt, bei welchem die Becher, an Ketten angelenkt, um Kettenräder im unteren Aufnahmebereich führbar sind. Im Aufnahmebereich sind einerseits ein vertikal und andererseits zwei im wesentlichen horizontal wirkende Zylinder vorgesehen, deren Zusammenspiel vertikale Schiffsbewegungen, bei Ausgleich sich ändernder Kettenlängen, ausgleichen soll. Problematisch ist hier die durchhängend, d.h. ungeführte Kette im unteren Aufnahmebereich zwischen den Umlenkrädern, die eine kontrollierte Kettenspannung bei verschiedenen Stellungen des Aufnahmebereichs erschwert. Da hier zwei Hydraulikzylinder im unteren Aufnahmebereich anzusteuern sind, wird die Einstellung der Kettenspannung darüber hinaus verkompliziert.

Der Erfindung liegt die Aufgabe zugrunde, den gattungsgemäßen Schiffsbe- oder -entlader dahingehend weiterzubilden, daß er in der Lage ist, Schiffsbewegungen in vertikaler Richtung problemlos folgen zu können, ohne daß eine Erhöhung des Gegengewichtes vonnöten ist.

Diese Aufgabe wird entsprechend den kennzeichnenden Merkmalen des ersten Patentanspruches gelöst.

Vorteilhafte Weiterbildungen des Erfindungsgegenstandes sind den Unteransprüchen zu entnehmen.

Durch diese Maßnahmen wird sichergestellt, daß nur ein Teil des eigentlichen Steilförderergewichtes im wesentlichen parallel zum Schiff bzw. zum Schiffsrumpf angehoben werden muß, wodurch größere Gegengewichte und komplizierte Steuerungen vermieden werden.

Das Anheben erfolgt durch mindestens einen Hydraulikzylinder, der im Vertikalbereich einerseits an Stützen desselben und andererseits an Widerlagern des Horizontalbereiches verlagert ist. Andere Hubeinrichtungen, wie Seile, Spindeln oder dgl., sind hier ebenfalls denkbar.

Der simultane Längenausgleich der Ketten wird über eine sogenannte hydraulische Kupplung (Längenausgleichseinrichtung) herbeigeführt, die vorzugsweise ebenfalls aus mindestens einem seitlich des Horizontalbereiches angeordneten und sich zwischen einer Stütze desselben und dem bzw. den Kettenrädern erstreckenden Hydraulikzylinder gebildet ist. Andere mechanische Einrichtungen, wie z.B. Spindeln, sind ebenfalls einsetzbar.

Die Längenänderungen im Vertikalbereich werden somit in den Horizontalbereich verlegt und durch die Längenausgleichseinrichtung kompensiert.

Im Vertikalbereich sind Überwachungselemente, wie z.B. Dehnmeßstreifen, vorgesehen, die ein Verkanten beim Heben und Senken des Horizontalbereiches gegenüber dem Vertikalbereich erkennen und durch Aktivieren hydraulischer Elemente und Betätigen des bzw. der Horizontal- bzw. der Vertikalzylinder eine Kompensation herbeiführen.

Im Vertikal- und/oder im Horizontal bereich sind sogenannte Abstandsmelder oder Druckelemente vorgesehen, die ein Heben oder Senken des Schiffsrumpfes in Abhängigkeit von der Wellenbewegung rechtzeitig erkennen und so zu einem schnellen Ansprechen der entsprechenden Zylinder führen.

Die Erfindung ist anhand eines Ausführungsbeispieles in der Zeichnung dargestellt und wird wie folgt beschrieben. Es zeigen:
- Figur 1: - Teildarstellung eines Schiffsentladers in Form eines Becherwerkes mit Schnitten durch den Horizontalbereich
- Figur 2: - Teildarstellung eines Schiffsentladers gemäß Figur 1 mit Schnitten durch den Vertikalbereich
- Figur 3: - Schnitte gemäß den Linien A-A sowie B-B gemäß Figur 1
- Figur 4: - Teildarstellung der Kettenführung
- Figur 5: - Schnitte gemäß den Linien C-C sowie D-D gemäß Figur 2

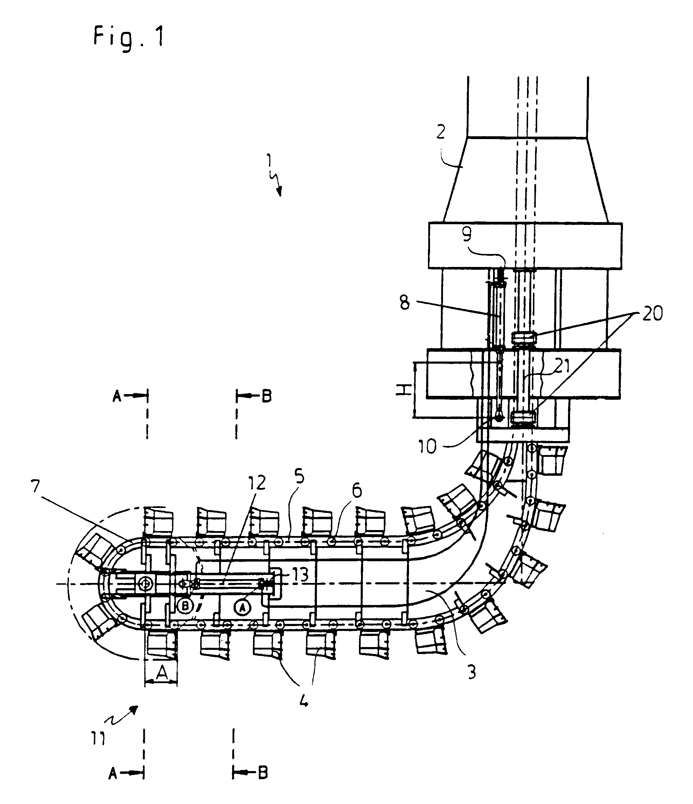

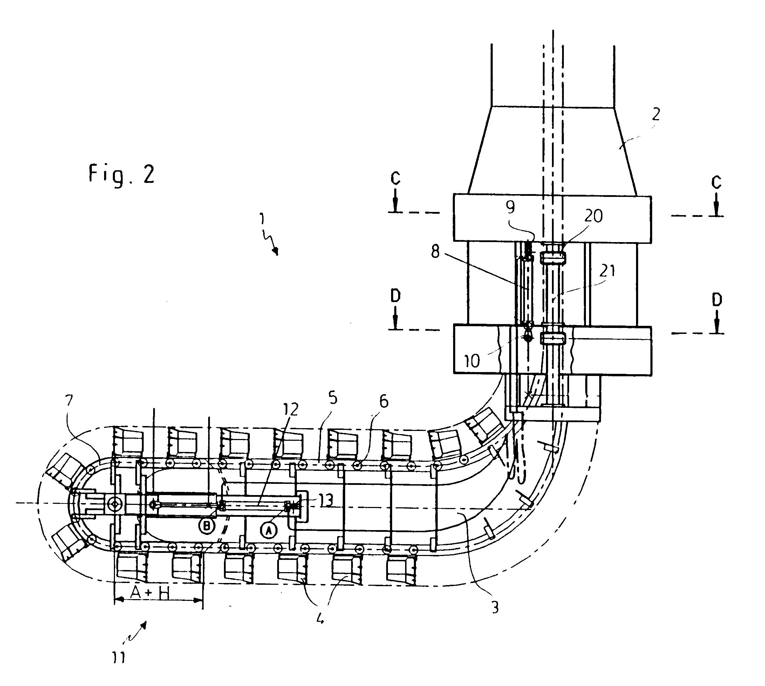

Die Figuren 1 und 2 zeigen den erfindungsgemäßen Schfffsentlader 1 jeweils in der Seitenansicht. Dargestellt sind einerseits ein Teil des Vertikalbereiches 2 und andererseits der Horizontalbereich 3, wobei die Verlängerung des Vertikalbereiches 2 mit einem nicht weiter dargestellten Ausleger verbunden ist. Im Vertikalbereich 2 sowie im Horizontalbereich 3 ist ein Becherwerk 4 vorgesehen, das mittels Ketten 5 bewegbar ist, an welchen Rollen 6 vorgesehen sind, die in entsprechenden, später erläuterten Führungen abrollen. Die Ketten 5 sind im Horizontalbereich 3 um entsprechende Kettenräder 7 umlenkbar. Um nun den Horizontalbereich 3 gegenüber dem Vertikalbereich 2 nach oben oder unten verschieben zu können, ist im Vertikalbereich 3 mindestens ein Hydraulikzylinder 8 vorgesehen, der einerseits an einer Stütze 9 des Vertikalbereiches 2 und andererseits an einem Widerlager 10 des Horizontalbereiches 3 verlagert ist und in der Lage ist, den Weg H abzudecken. Um den sich beim Anheben oder Absenken des Horizontalbereiches 3 zwangsläufig einstellenden Kettenlängungen bzw. -kürzungen gerecht zu werden, ist im Horizontalbereich 3, d.h. in der Nähe der Kettenräder 7 eine Längenausgleichseinrichtung 11 vorgesehen. Die Längenausgleichseinrichtung 11 wird gebildet durch mindestens einen weiteren Hydraulikzylinder 12, der einerseits an einer Stütze 13 des Horizontalbereiches 3 und andererseits an Bauteilen des bzw. der Kettenräder 7 verlagert ist. Figur 1 zeigt den Zylinder 8 in ausgefahrener und den Zylinder 12 in eingefahrener Position, während es bei Figur 2 genau umgekehrt ist. Die Betätigung der Zylinder 8, 12 erfolgt hierbei simultan, so daß es einerseits nicht zu übermäßigem Durchhängen der Ketten 5 und auch nicht zu unerwünschten Spannungen kommen kann. Der Verschiebeweg des Horizontalbereiches 3 ist hierbei gemäß Figur 1 mit A bezeichnet. Darüber hinaus zeigen die Figuren 1 und 2 Führungsstangen 21, die in sogenannten Schiebelagern 20 geführt sind, um auf diese Weise Verkantungen bei der Verschiebung des Horizontalbereiches 3 weitestgehend zu vermeiden.

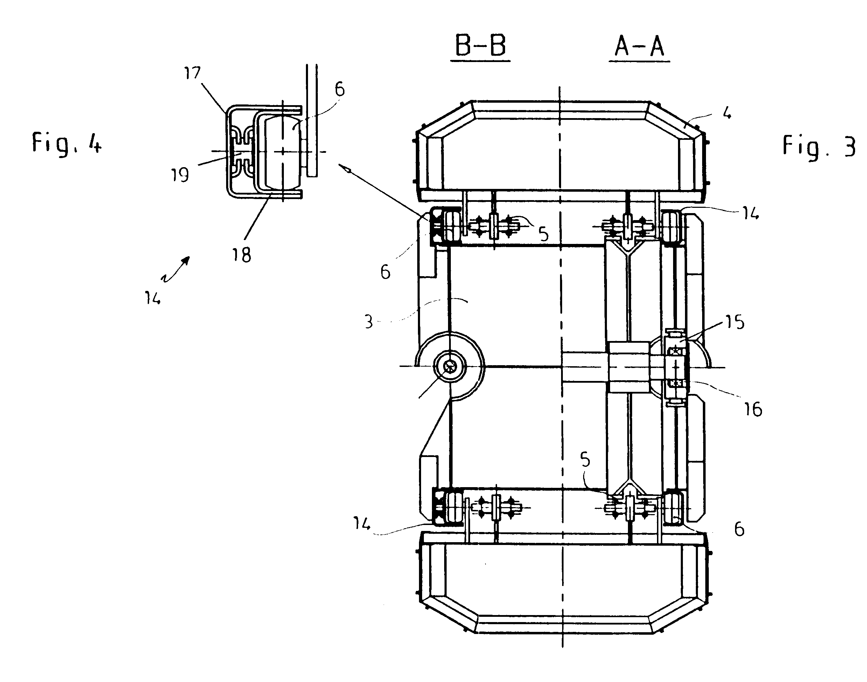

Figur 3 zeigt die Schnitte durch den Horizontal bereich 3 gemäß den Linien A-A sowie B-B. Erkennbar ist das Becherwerk 4, die Ketten 5 sowie die Rollen 6, die in der bereits angesprochenen Kettenführung 14 abrollen. Die Ketten 5 sind vorzugsweise als Rundgliederketten ausgebildet. Ferner dargestellt ist der Hydraulikzylinder 12 sowie eine parallel zu diesem auf der gegenüberliegenden Seite vorgesehene Gleitführung 15 mit Lager 16, um auch hier auftretende eventuelle Verkantungen beim Längenausgleich der Ketten 5 gerecht werden zu können.

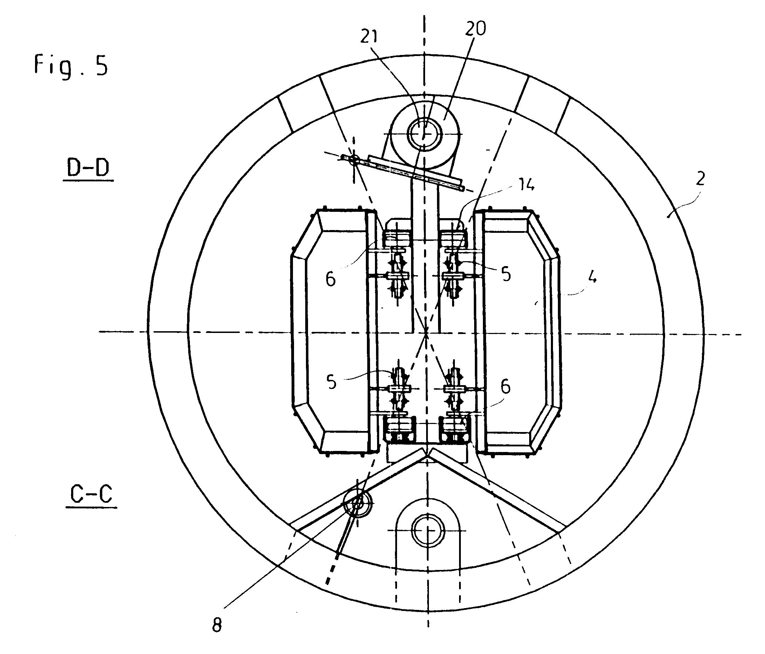

Figur 4 zeigt eine Teildarstellung der Kettenführung 14, die aus einem feststehenden äußeren U-Profil 17, einem inneren verschiebbaren U-Profil 18 sowie einem Führungsriegel 19 gebildet ist. Die Rollen 6 laufen hierbei im inneren Profil 18 ab, das gegenüber dem äußeren Profil 17 in dessen Längsrichtung relativ verschiebbar ist.

Figur 5 zeigt die Schnitte durch den Vertikalbereich 2 gemäß den Linien C-C sowie D-D. Erkennbar sind das Becherwerk 4, die Ketten 5, die Rollen 6 sowie die Kettenführung 14. Ferner dargestellt ist der Hydraulikzylinder 8 sowie das Schiebelager 20, das die Führungsstangen 21 des Vertikalbereiches 2 umgibt.

## Patentansprüche

1. Schiffsbe- oder -entlader mit einem an einem Ausleger verlagerbaren, im wesentlichen vertikal sich erstreckenden Bereich (2), der an seinem unteren Ende mit einem im wesentlichen horizontal sich erstreckenden, gegenüber dem vertikalen Bereich (2) in Abhängigkeit von vertikalen Schiffsbewegungen mittels mindestens eines Hydraulikzylinders (8) im wesentlichen parallel verlagerbaren Bereich (3) zusammenwirkt, sowie einem mittels Ketten (5) angetriebenen im vertikalen (2) und horizontalen Bereich (3) über Rollen (6) geführten Becherwerk (4), wobei im horizontalen Bereich (3) mindestens ein weiterer, den Längenausgleich der Ketten (5) herbeiführender Hydraulikzylinder (12) vorgesehen ist, der sich zwischen einer weiteren Stütze (13) im horizontalen Bereich (3) und Anlenkpunkten an dem bzw. den Kettenrädern (7) erstreckt, dadurch gekennzeichnet, daß sich der Hydraulikzylinder (8) zwischen einer Stütze (9) des vertikalen Bereichs (2) und einem entsprechenden Widerlager (10) des horizontalen Bereichs (3) erstreckt und daß im vertikalen (2) und/oder im horizontalen Bereich (3) eine Einrichtung zur Überwachung und zum Ausgleich von Verkantungen beim Heben und Senken des horizontalen Bereichs (3) vorgesehen ist, so daß bei Ansprechen des bzw. der im vertikalen Bereich (2) angeordneten Hydraulikzylinder (8) simultan ein Ansprechen des bzw. der im horizontalen Bereich (3) vorgesehenen Hydraulikzylinder (12) erfolgt.

2. Schiffsbe- oder -entlader nach Anspruch 1, dadurch gekennzeichnet, daß dem Hydraulikzylinder (8) mindestens ein Schiebelager (20) zugeordnet ist, das zur Führung einer zugehörigen Stange (21) dient.

3. Schiffsbe- oder -entlader nach den Ansprüchen 1 und 2, gekennzeichnet durch mindestens eine dem weiteren Hydraulikzylinder (12) gegenüberliegende Gleitführung (15) mit zugehörigem Lager (16).

4. Schiffsbe- oder -entlader nach den Ansprüchen 1 bis 3, dadurch gekennzeichnet, daß die Rollen (6) des Becherwerkes (4) in einer Kettenführung (14) abrollen, die aus einem äußeren (17) sowie einem inneren Profil (18) gebildet ist, wobei die Rollen (6) im Bereich des inneren Profiles (18) vorgesehen sind.

5. Schiffsbe- oder -entlader nach den Ansprüchen 1 bis 4, dadurch gekennzeichnet, daß das innere Profil (18) gegenüber dem äußeren Profil (17) in dessen Längsrichtung relativ verschiebbar ist.

6. Schiffsbe- oder -entlader nach den Ansprüchen 1 bis 5, dadurch gekennzeichnet, daß die Profile (17,18) einen U-förmigen Querschnitt aufweisen, wobei zwischen den beiden Profilen (17,18) ein Führungsriegel (19) vorgesehen ist.

7. Schiffsbe- oder -entlader nach den Ansprüchen 1 bis 6, gekennzeichnet durch einen Abstands- und/oder Druckmelder im Horizontal- (3) und/oder Vertikalbereich (2) des Schiffsbe- oder -entladers (1).

## Claims

1. Loading or discharging device for a ship comprising a substantially vertically extending region (2) movable on a boom, which cooperates at its lower end with a substantially horizontally extending region (3) movable substantially in parallel relative to the vertical region (2) by means of at least one hydraulic cylinder (8) as a function of vertical movements of the ship, and a bucket elevator (4) driven by means of chains (5) guided by rollers (6) in the vertical (2) and horizontal region (3), at least one further hydraulic cylinder (12) effecting length compensation of the chains (5) being provided in the horizontal region (3), and extending between a further support (13) in the horizontal region (3) and hinge points on the chain wheel or wheels (7), characterised in that the hydraulic cylinder (8) extends between a support (9) on the vertical region (2) and a corresponding abutment (10) on the horizontal region (3), and that a means for monitoring and compensating for canting during the rise and fall of the horizontal region (3) is provided in the vertical (2) and/or horizontal region (3), so that the actuation of the hydraulic cylinder or cylinders (8) arranged in the vertical region (2) results in the simultaneous actuation of the hydraulic cylinder or cylinders (12) provided in the horizontal region (3).

2. Loading or discharging device for a ship according to claim 1, characterised in that at least one slide bearing (20) is associated with the hydraulic cylinder (8) and serves to guide an associated rod (21).

3. Loading or discharging device for a ship according to claims 1 and 2, characterised by at least one sliding guide (15) with an associated bearing (16) opposite the further hydraulic cylinder (12).

4. Loading or discharging device for a ship according to claims 1 to 3, characterised in that the rollers (6) of the bucket elevator (4) roll along in a chain guide (14) which consists of an outer (17) and an inner section (18), the rollers (6) being provided in the region of the inner section (18).

5. Loading or discharging device for a ship according to claims 1 to 4, characterised in that the inner section (18) is displaceable in its longitudinal direction relative to the outer section (17).

6. Loading or discharging device for a ship according to claims 1 to 5, characterised in that the sections (17, 18) have a U-shaped cross section, a guide bolt (19) being provided between the two sections (17, 18).

7. Loading or discharging device for a ship according to claims 1 to 6, characterised by a proximity sensor and/or pressure indicator in the horizontal (3) and/or vertical region (2) of the loading or discharging device (1) for a ship.

## Revendications

1. Installation de chargement et de déchargement de navires, comportant une zone (2), disposée de façon essentiellement verticale, montée sur un bras, zone (2) qui, à son extrémité inférieure, agit en coordination avec une zone (3), disposée de façon essentiellement horizontale et pouvant, au moyen d'au moins un vérin hydraulique (8), se déplacer, en restant essentiellement parallèle, par rapport à la zone verticale (2) en fonction des mouvements verticaux du navire, cette installation de chargement et de déchargement de navires comportant également un convoyeur à godets (4), entraîné par des chaînes (5) et guidé par des galets (6) dans la zone verticale (2) et dans la zone horizontale (3), étant entendu que, dans la zone horizontale (3), il est prévu au moins un autre vérin hydraulique (12) effectuant le rattrapage de la longueur des chaînes (5) et s'étendant entre un support (13) dans la zone horizontale (3) et des points d'articulation sur la ou les roues (7) pour les chaînes,
caractérisée en ce que
le vérin hydraulique (8) est disposé entre un autre support (9) de la zone verticale (2) et un contre-appui correspondant (10) de la zone horizontale (3), et en ce que, dans la zone verticale (2) et/ou dans la zone horizontale (3), il est prévu un dispositif pour surveiller et pour corriger des coincements lors du soulèvement et de l'abaissement de la zone horizontale (3), de telle façon qu'en faisant agir le ou les vérins hydrauliques (8) disposés dans la zone verticale (2), il se produise simultanément une mise en fonctionnement du ou des vérins hydrauliques (12), disposés dans la zone horizontale (3).

2. Installation de chargement et de déchargement de navires suivant la revendication 1, caractérisée en ce qu'au vérin hydraulique (8), est associé au moins un palier coulissant (20), qui sert à guider une barre (21) associée.

3. Installation de chargement et de déchargement de navires suivant la revendication 1 et la revendication 2, caractérisée par au moins un guidage glissant (15), situé en face de l'autre vérin hydraulique (12), et comportant un palier (16) associé.

4. Installation de chargement et de déchargement de navires suivant les revendications 1 à 3, caractérisée en ce que les galets (6) du convoyeur à godets (4) roulent dans un guidage de chaîne (14), constitué d'un profilé extérieur (17) et d'un profilé intérieur (18), les galets (6) étant prévus dans la zone du profilé intérieur (18).

5. Installation de chargement et de déchargement de navires suivant les revendications 1 à 3, caractérisée en ce qu'on peut faire coulisser le profilé intérieur (18) par rapport au profilé extérieur (17) suivant sa direction longitudinale.

6. Installation de chargement et de déchargement de navires suivant les revendications 1 à 3, caractérisée en ce que les profilés (17, 18) présentent une section en U, étant entendu qu'entre les profilés (17, 18) il est prévu un verrou de guidage (19).

7. Installation de chargement et de déchargement de navires suivant les revendications 1 à 3, caractérisée par un indicateur de distance et/ou de pression dans la zone Òhorizontale (3) et/ou dans la zone verticale (2) de l'installation (1) de chargement et de déchargement de navires.
